# EUROPÄISCHE PATENTANMELDUNG

(11) **EP 4 276 054 A1**
(43) Veröffentlichungstag der Anmeldung: **15.11.2023**
(21) Anmeldenummer: 22172514.6
(22) Anmeldetag: 10.05.2022
(51) Int. Cl.: B67D 7/42, F16B 35/00

(54) **HAUPTVENTILEINSATZ FÜR EIN ZAPFVENTIL**

(71) Anmelder: ELAFLEX HIBY GmbH & Co. KG, 22525 Hamburg (DE)
(72) Erfinder: Kunter, Stefan, 22085 Hamburg (DE); Wehner, Michael, 20097 Hamburg (DE); Schörck, Torben, 22529 Hamburg (DE); Artmeier, Wolfgang, 22339 Hamburg (DE)
(74) Vertreter: Glawe, Delfs, Moll

(57) **Zusammenfassung**

Gegenstand der Erfindung ist ein Hauptventileinsatz (20) für ein Zapfventil (10) zur Ausbringung eines Fluids, mit einem sich durch den Hauptventileinsatz (20) erstreckenden Kanal (13), einem Ventilsitz (21), der zum Zusammenwirken mit einem Hauptventilkörper (14) des Zapfventils (10) ausgebildet ist, um einen Fluiddurchfluss durch den Kanal (13) zu steuern, und mit einem Außengewinde (22) zur Verbindung des Hauptventileinsatzes (20) mit dem Zapfventil (10). Erfindungsgemäß umfasst das Außengewinde (22) im Querschnitt betrachtet eine Mehrzahl von Gewindeerhebungen (23), die einen äußeren Flankenabschnitt (24) und einen inneren Flankenabschnitt (25) aufweisen, wobei ein Flankenwinkel der Gewindeerhebungen (23) im äußeren Flankenabschnitt (24) im Bereich zwischen 25° und 70° liegt und im inneren Flankenabschnitt (25) weniger als 20° beträgt, wobei eine Gewindesteigung des Außengewindes mehr als das 2-fache einer am Übergang zwischen den Flankenabschnitten (24, 25) gemessenen Breite der Gewindeerhebungen (23) beträgt.

## Beschreibung

Gegenstand der vorliegenden Erfindung ist ein Hauptventileinsatz für ein Zapfventil zur Ausbringung eines Fluids. Durch den Hauptventileinsatz erstreckt sich ein Kanal für das Fluid. Der Hauptventileinsatz umfasst zudem einen Ventilsitz, der zum Zusammenwirken mit einem Hauptventilkörper des Zapfventils ausgebildet ist, um einen Fluiddurchfluss durch den Kanal zu steuern. Zudem umfasst der Hauptventileinsatz ein Außengewinde zur Verbindung des Hauptventileinsatzes mit dem Zapfventil. Gegenstand der Erfindung ist weiterhin eine Anordnung mit einem Hauptventileinsatz und einer innerhalb eines Zapfventilgehäuses fixierbaren Gewindeaufnahme für den Hauptventileinsatz, sowie ein Zapfventil umfassend eine solche Anordnung.

Die Verwendung solcher Hauptventileinsätze ist aus dem Stand der Technik grundsätzlich bekannt. Der Hauptventileinsatz kann mit Hilfe des Außengewindes in ein innerhalb des Zapfventilgehäuses befindliches Innengewinde eingeschraubt und auf diese Weise sicher fixiert und positioniert werden. Ein innerhalb des Zapfventils verschiebbar gelagerter und gegen den Ventilsitz in eine Schließstellung vorgespannter Hauptventilkörper kann üblicherweise mit Hilfe eines Steuerhebels betätigt werden, um einen Fluiddurchfluss durch das Zapfventil zu steuern. Zu Reinigungs- und Wartungszwecken kann die Gewindeverbindung zwischen dem Hauptventilsitz und dem Innengewinde gelöst werden, um den Hauptventileinsatz zu entnehmen und so einen einfachen Zugang zum Hauptventileinsatz bzw. zu weiteren innerhalb des Zapfventils vorhandenen Bauteilen zu ermöglichen. Im Stand der Technik wurden für die Gewindeverbindung bisher üblicherweise Normal- oder Spitzgewinde verwendet, beispielsweise metrische Gewinde mit einem Flankenwinkel von 60°.

Ausgehend von diesem Stand der Technik ist es die Aufgabe der vorliegenden Erfindung, einen Hauptventileinsatz für ein Zapfventil zur Ausbringung eines Fluids bereitzustellen, der auf exakte und einfache Weise innerhalb des Zapfventils positionierbar ist. Gelöst wird diese Aufgabe mit den Merkmalen der unabhängigen Ansprüche. Vorteilhafte Ausführungsformen sind in den abhängigen Ansprüchen angegeben. Erfindungsgemäß weist das Außengewinde im Querschnitt betrachtet eine Mehrzahl von Gewindeerhebungen auf, die einen äußeren Flankenabschnitt und einen inneren Flankenabschnitt aufweisen, wobei ein Flankenwinkel der Gewindeerhebungen im äußeren Flankenabschnitt im Bereich zwischen 25° und 70° liegt und im inneren Flankenabschnitt weniger als 20° beträgt. Zudem beträgt eine Gewindesteigung des Außengewindes mehr als das 2-fache einer an einem Übergang zwischen den Flankenabschnitten gemessenen Breite der Gewindeerhebungen.

Zunächst werden einige im Rahmen der Erfindung verwendete Begriffe erläutert. Der Begriff Fluid kann im Rahmen der vorliegenden Offenbarung flüssige, gasförmige oder auch sich in Mischphasen befindliche Stoffe bezeichnen. Das Fluid kann insbesondere ein Kraftstoff sein.

Der betrachtete Querschnitt durch das Außengewinde verläuft durch eine zentral innerhalb des Außengewindes befindliche Mittelachse, welche sich entlang der Einschraubrichtung des Außengewindes erstreckt. Die Gewindeerhebungen sind durch einen Gewindevorsprung gebildet, der sich am Außenumfang des Gewindeeinsatzes helixförmig um die Mittelachse herum erstreckt. Der äußere Flankenabschnitt ist in Bezug auf die Mittelachse des Außengewindes weiter außen angeordnet als der innere Flankenabschnitt. Im Verlauf von innen nach außen kommt es am Übergang zwischen den Flankenabschnitten zu einer Änderung des Flankenwinkels. Am Übergang steht eine Gewindeflanke des äußeren Flankenabschnitts somit in einem Winkel zu der Gewindeflanke des inneren Flankenabschnitts.

Eine Längsrichtung des Ventilsitzes, entlang der ein Hauptventilkörper bewegt werden kann, um den Kanal dichtend zu verschließen, kann mit der Mittelachse des Außengewindes übereinstimmen.

Das Außengewinde ist in einer bevorzugten Ausführungsform eingängig ausgebildet. Im Folgenden wird entsprechend lediglich auf eine eingängige Ausgestaltung Bezug genommen. Möglich ist im Rahmen der Erfindung aber auch eine zwei- oder mehrgängige Ausgestaltung des Außengewindes.

Eine Gewindeerhebung weist im äußeren und/oder inneren Flankenabschnitt vorzugsweise jeweils zwei im Querschnitt betrachtet im Wesentlichen geradlinig verlaufende Gewindeflanken auf. Der Flankenwinkel innerhalb des inneren bzw. äußeren Flankenabschnitts ist in diesem Fall konstant. An einer außen liegenden Spitze der Gewindeerhebungen können diese abgerundet oder abgeflacht sein. Umfasst ist auch der Fall, in dem die Gewindeflanken eine konkave Krümmung oder Einkerbungen aufweisen. In diesem Fall kann der Flankenwinkel zwischen gedachten gradlinig verlaufenden äußeren Konturen (Einhüllenden) der Gewindeflanken bestimmt werden.

Die Gewindesteigung bezeichnet den Abstand zwischen benachbarten Gewindeerhebungen des Außengewindes.

Die erfindungsgemäße Form der Gewindeerhebungen mit unterschiedlichen Flankenwinkeln im Bereich der äußeren und inneren Flankenabschnitte sowie mit einer im Vergleich zur Breite der Gewindeerhebungen großen Gewindesteigung führt zu einer Mehrzahl von vorteilhaften Eigenschaften einer durch das Außengewinde realisierbaren Gewindeverbindung. Insbesondere hat sich gezeigt, dass die äußeren Flankenabschnitte, die nach der Art eines Spitzgewindes in einem Winkel zwischen 25° und 70° zueinander stehen, nach Herstellung einer Gewindeverbindung einen sicheren Halt mit hoher Selbsthemmung ermöglichen. Gleichzeitig eignen sich die im inneren Flankenabschnitt angeordneten Gewindeflanken, die gegenüber der Einschraubrichtung stärker geneigt sind oder sogar (bei einem Flankenwinkel von 0°) senkrecht zur Einschraubrichtung stehen können, im Vergleich zu den Gewindeflanken am äußeren Flankenabschnitt deutlich besser zur Kraft- bzw. Bewegungsübertragung während des Einschraubvorgangs und ermöglichen dadurch eine genauere Positionierung des Hauptventileinsatzes entlang der Mittelachse des Außengewindes.

Darüber hinaus vereinfacht die im Vergleich zur Breite der Gewindeerhebungen große Gewindesteigung bei der Montage das Auffinden des Gewindeeingangs, so dass das Außengewinde deutlich einfacher in ein passendes Innengewinde "eingefädelt" werden kann. Insbesondere kann ein Monteur aufgrund des großen Abstands zwischen zwei Gewindeerhebungen den Gewindeanfang des Außengewindes leicht finden, indem er das Außengewinde in Axialrichtung auf das Innengewinde aufsetzt und anschließend entgegen der Einschraubrichtung dreht bis der Gewindeanfang des Außengewindes einen Gewindeeingang eines Innengewindes überschreitet. Kurz nach dem Überschreiten kann das Außengewinde relativ zum Innengewinde entlang einer Strecke in Richtung Innengewinde bewegt werden, die der Gewindesteigung entspricht. Da diese beim vorliegenden Außengewinde groß ist, ist diese Bewegung für den Monteur leicht wahrnehmbar. Das Risiko einer Fehlmontage und einer damit einhergehenden Beschädigung oder Zerstörung des Gewindeanfangs wird dadurch deutlich reduziert. Zudem kann die leichte Auffindbarkeit des Gewindeeingangs ausgenutzt werden, um durch eine vorgegebene Drehung einen exakt festgelegten Gewindeeingriff sowie eine exakt vorgegebene Axialposition des Hauptventileinsatzes zu erreichen. Insbesondere kann dem Monteur eine Vorgabe gemacht werden, dass nach dem Auffinden des Gewindeeingangs zur Herstellung der Gewindeverbindung ein vorgegebener Einschraubwinkel eingehalten bzw. eine vorgegebene Anzahl von Drehungen des Außengewindes relativ zum Innengewinde ausgeführt werden muss. Eine genaue Einstellung der Axialposition ist für den Betrieb des Zapfventils wichtig, da davon die Kraft abhängt, die der Hauptventileinsatz auf benachbarte Teile (beispielsweise Dichtungen und/oder Federelemente) ausübt.

Im Stand der Technik war es hingegen üblich, bei der Montage mit Hilfe eines Drehmomentschlüssels ein vorgegebenes Drehmoment auszuüben, um auf diese Weise eine gewünschte Axialposition des Hauptventileinsatzes sowie eine gewünschte Gewindefestigkeit zu erreichen. Im Rahmen der Erfindung wurde allerdings erkannt, dass die Vorgabe eines Drehmoments aufgrund von Bauteiltoleranzen und Oberflächenbeschaffenheiten, welche die Reibung zwischen den Gewindepartnern beeinflussen können, zu einer fehlerhaften Einstellung der Axialposition führen kann. Durch die leichte Auffindbarkeit des Gewindeeingangs, die über die Vorgabe eines Einschraubwinkels einen exakten Gewindeeingriff ermöglicht, sowie durch die im inneren Flankenabschnitt bereitgestellten Gewindeflanken, die nahezu senkrecht zur Einschraubrichtung ausgerichtet sind, kann die Axialposition des erfindungsgemäßen Hauptventileinsatzes sowie die von diesem auf benachbarte Elemente ausgeübten Kräfte deutlich exakter eingestellt werden.

In einer Ausführungsform liegt der Flankenwinkel der Gewindeerhebungen im äußeren Flankenabschnitt im Bereich zwischen 40° und 70°, vorzugsweise zwischen 55° und 65°. Zudem kann der Flankenwinkel der Gewindeerhebungen im inneren Flankenabschnitt weniger als 10° und vorzugsweise (in etwa) 0° betragen. Ein Flankenwinkel von 0° bezeichnet dabei den Fall, in dem die Flanken parallel zueinander verlaufen (also senkrecht zur Mittelachse stehen). Weiterhin kann die Gewindesteigung mehr als das 1,6-fache und vorzugsweise mehr als das 2,5-fache der am Übergang zwischen den Flankenabschnitten gemessenen Breite der Gewindeerhebungen betragen. Darüber hinaus kann die Gewindesteigung weniger als das 6-fache und vorzugsweise weniger als das 3,5-fache der am Übergang zwischen den Flankenabschnitten gemessenen Breite der Gewindeerhebungen betragen. Die vorstehend bereits beschriebenen positiven Eigenschaften der Gewindeverbindung kommen durch die vorstehenden Konkretisierungen noch stärker zur Geltung.

Ein Abstand zwischen benachbarten Gewindeerhebungen (Gewindesteigung) kann zwischen 2,5 mm und 3 mm, vorzugsweise zwischen 2,6 und 2,9 mm, weiter vorzugsweise zwischen 2,7 mm und 2,8 mm liegen. Zudem kann die am Übergang zwischen den Flankenabschnitten gemessene Breite der Gewindeerhebungen in einem Bereich zwischen 0,5 mm und 1,5 mm, vorzugsweise zwischen 0,8 mm und 1,4 mm, weiter vorzugsweise zwischen 0,9 und 1,3 mm liegen. Eine Höhe des äußeren Flankenabschnitts kann zwischen 1,2 mm und 1,8 mm, vorzugsweise zwischen 1,4 mm und 1,6 mm liegen, wobei eine Höhe des inneren Flankenabschnitts (25) zwischen 0,8 mm und 1,4 mm, vorzugsweise zwischen 1 mm und 1,2 mm liegen kann. Die Breite bezeichnet dabei die im Querschnitt betrachtete Erstreckung der Gewindeerhebungen entlang der Mittelachse des Außengewindes. Die Höhe des jeweiligen Flankenabschnitts bezeichnet die im Querschnitt betrachtete Erstreckung des Flankenabschnitts in radialer Richtung (also senkrecht zur Mittelachse des Außengewindes). Ein Außendurchmesser des Außengewindes kann beispielsweise in einem Bereich zwischen 26 mm und 65 mm liegen. In einer bevorzugten Ausführungsformliegt der Außendurchmesser des Außengewindes zwischen 26 mm und 36 mm, vorzugsweise zwischen 28 mm und 34 mm, weiter vorzugsweise zwischen 30 mm und 32 mm. Alternativ können bevorzugte Bereiche des Außendurchmessers auch zwischen (jeweils einschließlich) 37 mm und 47 mm, zwischen 39 mm und 45 mm oder zwischen 41 mm und 43 mm liegen. Weiterhin alternativ können bevorzugte Bereiche des Außendurchmessers auch (jeweils einschließlich) zwischen 49 mm und 59 mm, zwischen 51 mm und 57 mm oder zwischen 53 mm und 55 mm liegen. Bevorzugte Bereich des Kerndurchmessers ergeben sich durch die bevorzugten Bereiche des Außendurchmessers abzüglich der oben bereits erwähnten Höhe der beiden Flankenabschnitte.

In einer Ausführungsform weist das Außengewinde zwischen den Gewindeerhebungen eine Bodenfläche auf, deren Kontur im Wesentlichen parallel zu einer konzentrisch zur Mittelachse des Außengewindes ausgerichteten Zylinderfläche verläuft. Die Bodenfläche kann sich im Querschnitt über einen Teilbereich des Zwischenraums zwischen den Gewindeerhebungen oder über den Gesamten Zwischenraum erstrecken. Die Mittelachse bildet in diesem Fall das Zentrum der Zylinderfläche. Insbesondere kann die Kontur der Bodenfläche einen helixförmigen Verlauf entlang der Zylinderfläche annehmen. Durch die Bodenfläche kann die Ausrichtung des Außengewindes auch in radialer Richtung verbessert werden. Insbesondere kann das Innengewinde bei Herstellung der Gewindeverbindung in radialer Richtung an der Bodenfläche entlang geführt werden.

Gegenstand der Erfindung ist weiterhin eine Anordnung umfassend einen erfindungsgemäßen Hauptventileinsatz und eine innerhalb eines Zapfventilgehäuses fixierbare Gewindeaufnahme für den Hauptventileinsatz. Die Gewindeaufnahme weist ein Innengewinde auf, das mit dem Außengewinde in Eingriff steht, wobei das Innengewinde Gewindeaussparungen aufweist, in die die im äußeren Flankenabschnitt befindlichen Gewindeflanken der Gewindeerhebungen unter Ausbildung einer tragenden Gewindeverbindung eingreifen. Weiterhin weist das Innengewinde einen zwischen den Gewindeaussparungen befindlichen Führungsvorsprung auf, der sich zumindest über einen Teil des Umfangs des Innengewindes erstreckt und der in Axialrichtung an einer im inneren Flankenabschnitt befindlichen Gewindeflanke einer Gewindeerhebung anliegt. Indem der Führungsvorsprung an der zur Mittelachse stark geneigten (oder sogar senkrecht dazu stehenden) Gewindeflanke anliegt, erfüllt er eine Führungsfunktion, so dass die Axialposition des Hauptventilsitzes während des Einschraubvorgangs exakt vorgegeben wird. Möglich ist, dass der Führungsvorsprung zusätzlich eine tragende Funktion übernimmt und dadurch zusätzlich zur Gewindefestigkeit beiträgt. Der Führungsvorsprung kann auch in radialer Richtung an der Bodenfläche des Außengewindes anliegen und auf diese Weise eine radiale Führung ermöglichen, durch die der Hauptventileinsatz relativ zum Innengewinde zentriert wird.

Der Führungsvorsprung kann an einem Gewindeeingang des Innengewindes positioniert sein. Dies hat den Vorteil, dass es bereits bei der Herstellung der Gewindeverbindung zu einer exakten Führung des Hauptventileinsatzes entlang der Mittelachse des Außengewindes kommt.

Der Hauptventileinsatz kann in Einschraubrichtung vor dem Außengewinde positionierte Führungsflächen aufweisen, die derart ausgestaltet sind, dass sie beim Einführen des Hauptventileinsatzes in die Gewindeaufnahme vom Führungsvorsprung gleitend geführt werden. Insbesondere können die Führungsflächen einen an den minimalen Innendurchmesser des Innengewindes angepassten maximalen Durchmesser aufweisen. Der Führungsvorsprung kann sich über einen Umfangsabschnitt des Innengewindes von zumindest 90°, vorzugsweise zumindest 180°, weiter vorzugsweise zumindest 270° erstrecken.

Gegenstand der Erfindung ist zudem ein Zapfventil zur Ausbringung eines Fluids, umfassend ein Zapfventilgehäuse, einen Einlass, einen Auslass, einen den Einlass mit dem Auslass verbindenden Hauptkanal für das Fluid, einen Hauptventilkörper, einen Steuerhebel zur Betätigung des Zapfventils sowie eine erfindungsgemäße Anordnung. Die erfindungsgemäße Anordnung kann insbesondere innerhalb des Zapfventilgehäuses derart fixiert sein, dass der Kanal einen Teil des Hauptkanals des Zapfventils bildet. Die vorstehend bereits in Verbindung mit dem Hauptventileinsatz beschriebenen Vorteile führen insbesondere dazu, dass der Hauptventileinsatz innerhalb des Zapfventilgehäuses exakt positionierbar ist.

Nachfolgend wird eine bevorzugte Ausführungsform der Erfindung unter Bezugnahme auf die beigefügten Zeichnungen beispielhaft erläutert. Es zeigen:
- Figur 1:: ein erfindungsgemäßes Zapfventil in einer teilweise geschnittenen Seitenansicht;
- Figur 2:: einen erfindungsgemäßen Hauptventileinsatz in einer dreidimensionalen Ansicht von schräg oben;
- Figur 3:: den erfindungsgemäßen Hauptventileinsatz der Figur 2 sowie eine Gewindeaufnahme vor der Herstellung einer Gewindeverbindung in einer teilweise geschnittenen Seitenansicht;
- Figur 4:: Querschnittsansicht eines Teilbereichs eines Außengewindes (unten) und eines Innengewindes (oben) der Anordnung der Figur 3;
- Figur 5:: die erfindungsgemäße Anordnung der Figur 3 in einer seitlichen Schnittansicht nach Herstellung der Gewindeverbindung;
- Figur 6:: einen Teilausschnitt aus der Figur 5 in vergrößerter Darstellung;
- Figur 7:: einen Teilausschnitt aus der Figur 5 in vergrößerter Darstellung.

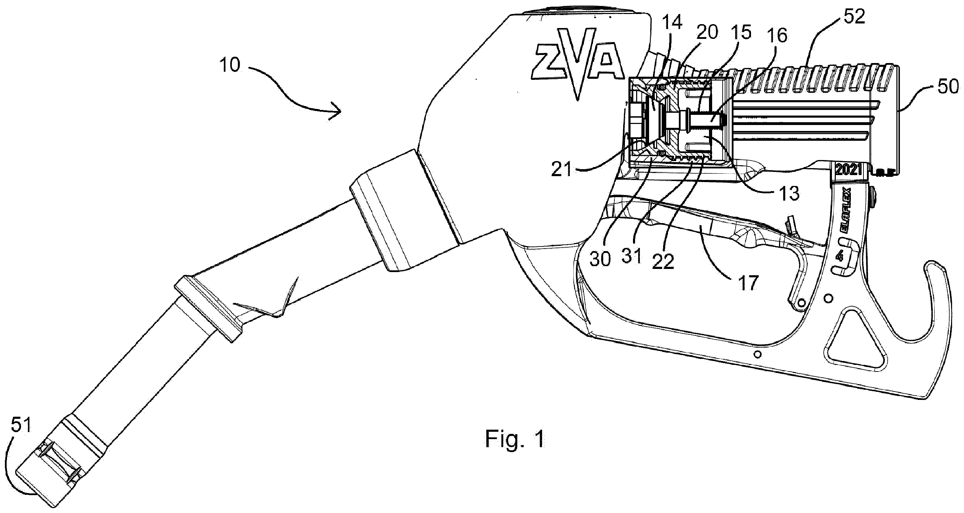

Figur 1 zeigt ein erfindungsgemäßes Zapfventil 10 in einer teilweise geschnittenen Seitenansicht. Das Zapfventil umfasst ein Gehäuse 52, einen Einlass 50, einen Auslass 51 sowie einen sich durch das Zapfventil erstreckenden Hauptkanal, der den Einlass 50 mit dem Auslass 51 verbindet. Innerhalb des Gehäuses 52 ist eine Gewindeaufnahme 30 fixiert, die mit einem Innengewinde 31 versehen ist. Die Gewindeaufnahme 30 kann einstückig in das Gehäuse 52 integriert oder als separates Bauteil ausgebildet sein. Zudem weist das Zapfventil einen Hauptventileinsatz 20 mit einem Außengewinde 22 auf, dass mit dem Innengewinde 31 verschraubt ist. Durch die Gewindeverbindung zwischen dem Innengewinde 31 und dem Außengewinde 22 wird der Hauptventileinsatz 20 innerhalb des Gehäuses 52 derart positioniert, dass ein sich durch den Hauptventileinsatz 20 erstreckender Kanal 13 einen Teil des Hauptkanals bildet.

Das Zapfventil weist weiterhin einen Hauptventilkörper 14 auf, der in dem in Figur 1 gezeigten Zustand gegen einen Hauptventilsitz 21 des Hauptventileinsatzes 20 anliegt. Der Hauptventilkörper 14 ist mit einem Ventilkolben 16 verbunden und wird durch ein Vorspannelement 15 in eine Schließstellung gegen den Ventilsitz 21 vorgespannt. Das Zapfventil kann auf bekannte Weise mit Hilfe eines Steuerhebels 17 betätigt werden.

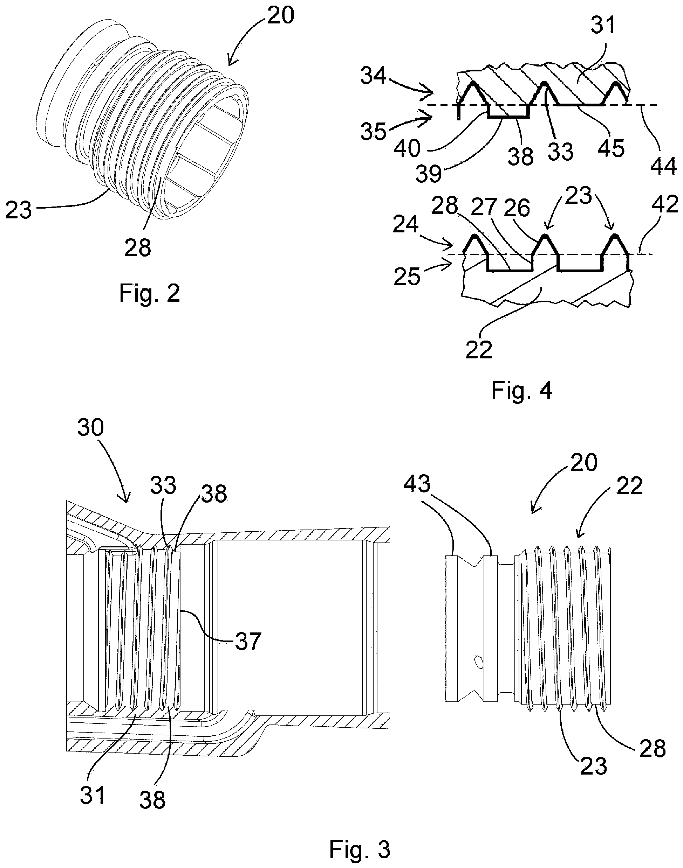

Figur 2 zeigt eine dreidimensionale Ansicht des erfindungsgemäßen Hauptventileinsatzes 20 der Figur 1. Das Außengewinde 22 des Hauptventileinsatzes 20 weist einen Gewindevorsprung auf, der sich helixförmig und konzentrisch zu einer Mittelachse des Außengewindes 22 um den Außenumfang des Hauptventileinsatzes 20 herum erstreckt. Im Querschnitt betrachtet (siehe unterer Teil der Figur 4) sind vom Gewindevorsprung eine Mehrzahl von Gewindeerhebungen 23 sichtbar. Zwischen den Gewindeerhebungen 23 befindet sich eine Bodenfläche 28, die im Wesentlichen parallel zur Mittelachse ausgerichtet ist und sich ebenfalls helixförmig um diese herum erstreckt.

Figur 3 zeigt den erfindungsgemäßen Hauptventileinsatz 20 der Figur 2 sowie eine Gewindeaufnahme 30 vor der Herstellung einer Gewindeverbindung in einer teilweise geschnittenen Seitenansicht. In dieser Ansicht ist erkennbar, dass das Innengewinde 31 Gewindeaussparungen 33 aufweist, in die die Gewindeerhebungen 23 des Hauptventileinsatzes 20 bei Herstellung der Gewindeverbindung eingreifen. Zudem umfasst das Innengewinde 31 im Bereich des Gewindeeingangs 37 einen Führungsvorsprung 38, der sich über einen Umfangswinkel von 360° erstreckt. Der Führungsvorsprung 38 ist dazu ausgestaltet, beim Einführen des Hauptventileinsatzes 20 mit Führungsflächen 43 zusammenzuwirken, die am vorderen Ende des Hauptventileinsatzes 20 in Einschraubrichtung vor dem Außengewinde 22 angeordnet sind. Der Hauptventileinsatz 20 wird durch das Zusammenwirken von Führungsflächen 43 und Führungsvorsprung 38 relativ zur Gewindeaufnahme 30 zentriert. Die Ausgestaltung des Außengewindes 22 sowie des Innengewindes 31 wird nachfolgend anhand der Figuren 4 bis 7 noch genauer erläutert.

Figur 4 zeigt eine Querschnittsansicht von zwei Teilbereichen der Figur 3, in denen das Außengewinde des Gewindeeinsatzes 20 (unterer Teil der Figur 4) und das Innengewinde der Gewindeaufnahme 30 (oberer Teil der Figur 4) zu sehen sind. Der Querschnitt ist entlang der Mittelachse der jeweiligen Gewinde ausgerichtet. In dieser Ansicht ist erkennbar, dass die Gewindeerhebungen 23 einen äußeren Flankenabschnitt 24 und einen inneren Flankenabschnitt 25 aufweisen. Ein Übergang zwischen den Flankenabschnitten 24, 25 ist in Figur 4 durch eine gestrichelte Linie 42 angedeutet. Im äußeren Flankenabschnitt 24 sind die Gewindeerhebungen 23 jeweils durch zwei Gewindeflanken 26 gebildet, die in einem Flankenwinkel von 60° zueinander ausgerichtet sind. Im inneren Flankenabschnitt 25 weist eine Gewindeerhebung 23 zwei Gewindeflanken 27 auf, die parallel zueinander ausgerichtet sind (also in einen Winkel von 0° zueinanderstehen). Die Gewindeflanken 27 sind somit senkrecht zur Mittelachse des außen Gewindes 22 ausgerichtet. Zwischen zwei Gewindeerhebungen 23 befindet sich die oben bereits erwähnte Bodenfläche 28.

Im oberen Teil der Figur 4 ist erkennbar, dass das Innengewinde 31 ebenfalls einen inneren Flankenabschnitt 35 und einen äußeren Flankenabschnitt 34 aufweist. Ein Übergang zwischen den Flankenabschnitten 34, 35 ist auch hier durch eine gestrichelte Linie 44 angedeutet. Im äußeren Flankenabschnitt 34 befinden sich die Gewindeaussparungen 33. Die Gewindeaussparungen 33 sind derart ausgestaltet, dass die Gewindeflanken 26 des Außengewindes 22 beim Einschrauben des Hauptventileinsatzes unter Ausbildung einer tragenden Gewindeverbindung in die Gewindeaussparungen 33 eingreifen. Aufgrund des Flankenwinkels der Gewindeerhebungen 23 sowie der Gewindesteigung kann auf diese Weise eine hohe Gewindefestigkeit mit guter Selbsthemmung erzielt werden.

Zwischen der in Figur 4 gezeigten linken Gewindeaussparung 33 und der mittleren Gewindeaussparung 33 befindet sich der oben bereits erwähnte Führungsvorsprung 38. Der Führungsvorsprung 38 erstreckt sich in radialer Richtung über die Übergangslinie 44 hinaus und weist eine radiale Führungskante 39 und axiale Führungskanten 40 auf. Bei Herstellung der Gewindeverbindung liegen die axialen Führungskanten 40 an korrespondierenden Gewindeflanken 27 im inneren Flankenabschnitt 25 des Außengewindes 22 an. Dadurch wird die Drehung des Hauptventilsatzes effizient und positionsgenau in eine axiale Verschiebung umgewandelt. Zudem findet durch Zusammenwirken der radialen Führungskante 39 mit der Bodenfläche 28 eine exakte Zentrierung des Hauptventileinsatzes 20 relativ zum Innengewinde 31 statt.

Der Führungsvorsprung 38 erstreckt sich, wie oben bereits erwähnt, nur über einen Teil des Umfangs des Innengewindes 31. Entsprechend ist in Figur 4 zwischen der mittleren Gewindeaussparung 33 und der rechten Gewindeaussparung 33 kein Führungsvorsprung 38 vorhanden, sondern eine flache Gewindeerhebung 45, die in radialer Richtung nicht über die Linie 44 hinausreicht. Im Rahmen der Erfindung hat sich gezeigt, dass ein sich lediglich über einen Teilabschnitt des Umfangs erstreckender Führungsvorsprung 38 für die radiale und axiale Positionierung bereits ausreichend ist. In anderen Ausführungsformen kann sich der Führungsvorsprung 38 aber auch über einen größeren Umfangswinkel oder über das gesamte Innengewinde erstrecken.

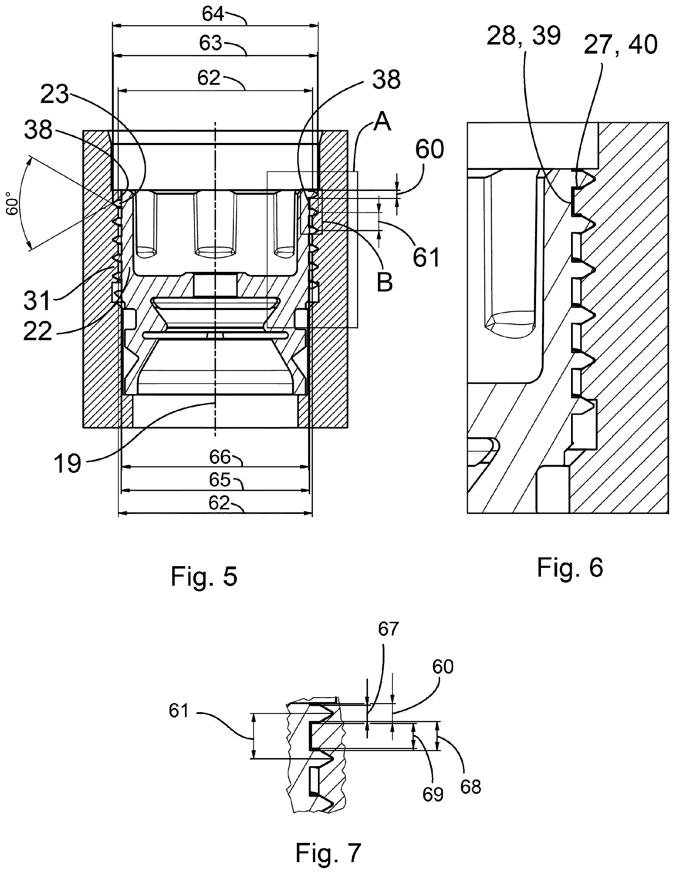

Figur 5 zeigt die erfindungsgemäße Anordnung der Figur 3 in einer seitlichen Schnittansicht nach Herstellung der Gewindeverbindung zwischen dem Außengewinde 22 und dem Innengewinde 31. Figur 6 zeigt den in Figur 5 mit dem Buchstaben A gekennzeichneten Teilausschnitt in vergrößerter Darstellung. Figur 7 zeigt den in der Figur 5 mit dem Buchstaben B gekennzeichneten Ausschnitt in vergrößerter Darstellung. Aus den Figuren ist ersichtlich, dass sich der am Gewindeeingang 39 des Innengewindes 22 angeordnete Führungsvorsprung 38 zwischen zwei Gewindeerhebungen 23 befindet, wobei die radiale Führungskante 39 an der Bodenfläche 28 und die axiale Führungskante 40 an einer Gewindeflanke 27 im inneren Flankenabschnitt 25 anliegt. In dieser Ansicht ist auch die Mittelachse 19 des Außengewindes 22 und des Innengewindes 31 illustriert.

In Figur 5 ist der Flankenwinkel von 60° einer Gewindeerhebung 23 eingezeichnet. Zudem sind in den Figuren 5 und 7 mit Hilfe von Linien und daran angeordneten Pfeilen die nachfolgenden Gewindeparameter eingezeichnet:
60: Breite einer Gewindeaussparung 33 (im Bereich der Übergangslinie 44) = 1,2 mm;
61: Gewindesteigung = 2,75 mm;
62: Innendurchmesser des Innengewindes im Bereich der flachen Gewindeerhebung 45 (entspricht dem Abstand zwischen zwei in Figur 4 illustrierten Übergangslinien 42 bzw. 44) = 29,4 mm;
63: Außendurchmesser des Außengewindes 22 = 30,9 mm;
64: Maximaler Innendurchmesser des Innengewindes 31 = 31 mm;
65: Innendurchmesser des Innengewindes im Bereich des Führungsvorsprungs 38 = 28,5;
66: Außendurchmesser des Außengewindes im Bereich der Bodenfläche 28 = 28,3 mm;
67: Breite einer Gewindeerhebung 23 = 1 mm;
68: Breite der Führungsfläche 28 = 1,75 mm;
69: Breite des Führungsvorsprungs 38 = 1,525 mm.

## Patentansprüche

1. Hauptventileinsatz (20) für ein Zapfventil (10) zur Ausbringung eines Fluids, mit einem sich durch den Hauptventileinsatz (20) erstreckenden Kanal (13), einem Ventilsitz (21), der zum Zusammenwirken mit einem Hauptventilkörper (14) des Zapfventils (10) ausgebildet ist, um einen Fluiddurchfluss durch den Kanal (13) zu steuern, und mit einem Außengewinde (22) zur Verbindung des Hauptventileinsatzes (20) mit dem Zapfventil (10), **dadurch gekennzeichnet, dass** das Außengewinde (22) im Querschnitt betrachtet eine Mehrzahl von Gewindeerhebungen (23) aufweist, die einen äußeren Flankenabschnitt (24) und einen inneren Flankenabschnitt (25) umfassen, wobei ein Flankenwinkel der Gewindeerhebungen (23) im äußeren Flankenabschnitt (24) im Bereich zwischen 25° und 70° liegt und im inneren Flankenabschnitt (25) weniger als 20° beträgt, wobei eine Gewindesteigung des Außengewindes mehr als das 2-fache einer am Übergang (42) zwischen den Flankenabschnitten (24, 25) gemessenen Breite der Gewindeerhebungen (23) beträgt.

2. Hauptventileinsatz (20) gemäß Anspruch 1, bei dem der Flankenwinkel der Gewindeerhebungen (23) im äußeren Flankenabschnitt (24) im Bereich zwischen 40° und 70°, vorzugsweise zwischen 55° und 65° liegt.

3. Hauptventileinsatz (20) gemäß Anspruch 1 oder 2, bei dem der Flankenwinkel der Gewindeerhebungen (23) im inneren Flankenabschnitt (25) weniger als 10° und vorzugsweise 0° beträgt.

4. Hauptventileinsatz (20) gemäß einem der Ansprüche 1 bis 3, bei dem die Gewindesteigung mehr als das 1,6-fache und/oder weniger als das 6-fache der am Übergang (42) zwischen den Flankenabschnitten (24, 25) gemessenen Breite der Gewindeerhebungen (23) beträgt.

5. Hauptventileinsatz (20) gemäß einem der Ansprüche 1 bis 4, bei dem die Gewindesteigung zwischen 2,5 mm und 3 mm, vorzugsweise zwischen 2,6 und 2,9 mm, weiter vorzugsweise zwischen 2,7 mm und 2,8 mm liegt.

6. Hauptventileinsatz (20) gemäß einem der Ansprüche 1 bis 5, bei dem die am Übergang (42) zwischen den Flankenabschnitten (24, 25) gemessene Breite der Gewindeerhebungen (23) in einem Bereich zwischen 0,5 mm und 1,5 mm, vorzugsweise zwischen 0,8 mm und 1,4 mm, weiter vorzugsweise zwischen 0,9 und 1,3 mm liegt.

7. Hauptventileinsatz (20) gemäß einem der Ansprüche 1 bis 6, bei dem das Außengewinde (22) zwischen den Gewindeerhebungen (23) eine Bodenfläche (28) aufweist, deren Kontur im Wesentlichen parallel zu einer konzentrisch zu einer Mittelachse (19) des Außengewindes (22) ausgerichteten Zylinderfläche ausgerichtet ist.

8. Hauptventileinsatz (20) gemäß einem der Ansprüche 1 bis 7, bei dem eine Höhe des äußeren Flankenabschnitts (24) zwischen 1,2 mm und 1,8 mm, vorzugsweise zwischen 1,4 mm und 1,6 mm liegt, wobei eine Höhe des inneren Flankenabschnitts (25) zwischen 0,8 mm und 1,4 mm, vorzugsweise zwischen 1 mm und 1,2 mm liegt.

9. Hauptventileinsatz (20) gemäß einem der Ansprüche 1 bis 8, bei dem ein Außendurchmesser des Außengewindes (22) zwischen 26 mm und 36 mm, vorzugsweise zwischen 28 mm und 34 mm, weiter vorzugsweise zwischen 30 mm und 32 mm liegt, oder bei dem der Außendurchmesser des Außengewindes (22) zwischen 37 mm und 47 mm liegt, oder bei dem der Außendurchmesser zwischen 49 mm und 59 mm liegt.

10. Anordnung umfassend einen Hauptventileinsatz (20) gemäß einem der Ansprüche 1 bis 9 und eine innerhalb eines Zapfventilgehäuses (52) fixierbare Gewindeaufnahme (30) für den Hauptventileinsatz (20), wobei die Gewindeaufnahme (30) ein Innengewinde (31) aufweist, das mit dem Außengewinde (22) in Eingriff steht, wobei das Innengewinde (31) Gewindeaussparungen (33) aufweist, in die die im äußeren Flankenabschnitt (24) befindlichen Gewindeflanken (26) der Gewindeerhebungen (23) unter Ausbildung einer tragenden Gewindeverbindung eingreifen, wobei das Innengewinde einen zwischen den Gewindeaussparungen (33) befindlichen Führungsvorsprung (38) aufweist, der sich zumindest über einen Teil des Umfangs des Innengewindes erstreckt und der in Axialrichtung an einer im inneren Flankenabschnitt (24) befindlichen Gewindeflanke (27) einer Gewindeerhebung (23) anliegt.

11. Anordnung gemäß Anspruch (10), bei dem der Führungsvorsprung (38) an einem Gewindeeingang des Innengewindes (31) positioniert ist.

12. Anordnung gemäß einem der Ansprüche 10 oder 11, bei dem der Hauptventileinsatz (20) in Einschraubrichtung vor dem Außengewinde positionierte Führungsflächen (43) aufweist, die derart ausgestaltet sind, dass sie beim Einführen des Hauptventileinsatzes (20) in die Gewindeaufnahme (30) vom Führungsvorsprung (38) gleitend geführt werden, wobei sich der Führungsvorsprung vorzugsweise über einen Umfangsabschnitt von zumindest 90° des Innengewindes (31), weiter vorzugsweise zumindest 180°, weiter vorzugsweise zumindest 270° erstreckt.

13. Anordnung gemäß einem der Ansprüche 10 bis 12, bei dem das Außengewinde (22) eine zwischen den Gewindeerhebungen (23) befindliche Bodenfläche (28) aufweist, wobei der Führungsvorsprung (38) in radialer Richtung an der Bodenfläche (28) anliegt.

14. Zapfventil (10) zur Ausbringung eines Fluids, umfassend ein Zapfventilgehäuse (52), einen Einlass (50), einen Auslass (51), einen den Einlass (50) mit dem Auslass (51) verbindenden Hauptkanal für das Fluid, einen Hauptventilkörper (14), einen Steuerhebel (17) zur Betätigung des Zapfventils (10) sowie eine Anordnung gemäß einem der Ansprüche 10 bis 13.
